Europäisches Patentamt

European Patent Office

Office européen des brevets

(19)

(11) Veröffentlichungsnummer: **0 179 312**

**A2**

(12) # EUROPÄISCHE PATENTANMELDUNG

(21) Anmeldenummer: **85112415.6**

(22) Anmeldetag: **01.10.85**

(51) Int. Cl.⁴: **F 02 P 5/15**

(30) Priorität: **08.10.84 DE 3436907**

(43) Veröffentlichungstag der Anmeldung:
**30.04.86 Patentblatt 86/18**

(84) Benannte Vertragsstaaten:
**BE CH DE FR GB IT LI NL SE**

(71) Anmelder: **Atlas Fahrzeugtechnik GmbH**
**Eggenpfad 26**
**D-5980 Werdohl(DE)**

(72) Erfinder: **Klüppel, Klemens**
**Borketalstrasse 35**
**D-5982 Neuenrade 5(DE)**

(72) Erfinder: **Stübs, Albert**
**Am Weiten Blick 35**
**D-5880 Lüdenscheid(DE)**

(74) Vertreter: **Hassler, Werner, Dr.**
**Postfach 17 04 Asenberg 62**
**D-5880 Lüdenscheid(DE)**

(54) **Anordnung zur Erzeugung eines Auslöseimpulses.**

(57) Eine Anordnung zur Erzeugung eines Auslöseimpulses für die Zündung eines Verbrennungsmotors, wobei kurbelwellenwinkelsynchrone Winkelimpulse erzeugt werden. Das technische Problem ist eine Erhöhung der Korrekturmöglichkeiten durch Bereitstellung aller Einstellwerte für das Zündkennfeld und der Betriebsdaten für den Verbrennungsmotor in dem Korrekturwertspeicher. Es wird eine drehzahlabhängige Temperaturkorrektur jedes einzelnen Auslöseimpulses gewünscht. Zwischen den Winkeladreßzähler (20) und den Korrekturwertspeicher (22) ist ein Haltekreis (55) eingeschaltet. Für das Winkeladreßsignal des Winkeladreßzählers (20) ist ein Decoder (58) vorgesehen, der beim Auftreten bestimmter Winkeladressen Steuersignale abgibt. Ein A/D-Wandler (64) ist zur Wandlung analoger Druck- und Temperaturwerte vorgesehen. Für den digitalen Druckwert und den digitalen Temperaturwert ist jeweils ein Haltekreis (65, 66) vorgesehen, dessen Ausgänge mit Adreßeingängen des Korrekturwertspeichers (22) verbunden sind. Dem Auslösezähler (15) ist ein Impulsverzögerungszähler (53) nachgeschaltet, dessen Voreinstellung durch ein Temperaturkorrektursignal erfolgt.

EP 0 179 312 A2

./...

Haßler, Werner, Dr.

Patentanwalt

Asenberg 62

D-5880 Lüdenscheid (DE)

0179312

30. September 1985

A 85 083

Anmelderin: Firma Atlas Fahrzeugtechnik GmbH

Eggenpfad 26

D-5980 Werdohl (DE)

### Anordnung zur Erzeugung eines Auslöseimpulses

### Beschreibung

Die Erfindung betrifft eine Anordnung zur Erzeugung eines Auslöseimpulses für die Zündung eines Verbrennungsmotors, der innerhalb einer Arbeitsperiode um eine von Drehzahl und anderen Kenngrößen abhängige Phase gegenüber einer Bezugsphase verzögert ist, wobei ausgehend von der Bezugsphase neben einem Bezugsimpuls kurbelwellenwinkelsynchrone Winkelimpulse erzeugt werden, die in einen Winkeladreßzähler eingespeist werden, an dessen Ausgang auf Winkeladreßleitungen ein dem jeweiligen Winkelimpuls zugeordnetes Mehrbitadreßsignal zur Verfügung steht, das an einem Korrekturwertspeicher anliegt, der an seinem Ausgang ein digitales Korrektursignal bereitstellt, wobei ferner ein Zeitbasiszähler zur Vorgabe eines Korrekturintervalls während jeder Arbeitsperiode vorgesehen ist und wobei die Winkelimpulse an einem steuerbaren Vervielfacher anliegen, dessen Steuereingang durch das Korrektursignal gesteuert wird und dessen Ausgang an einem Auslösezähler anliegt, der bei Erreichen eines Überlaufwertes einen Auslöseimpuls abgibt.

Eine derartige Anordnung ist in der DE-PS 31 28 922 beschrieben. Durch Änderung der Impulsfolge kann man die Phase des Zündimpulses drehzahl- und parameterabhängig verstellen. Die Korrektur der Impulsfolge erfolgt während einer Zeitbasis, die einen Bruchteil der Kurbelwellenumdrehung ausmacht. Innerhalb der Zeitbasis können Änderungen der Impulsfolge durch Weglassen oder Einfügen von Impulsen erfolgen, so daß der Überlaufwert des Auslösezählers zu einer anderen Winkelphase erreicht wird. Dieses bedeutet eine entsprechende Verstellung des Zündzeitpunktes. Während der Zeitbasis werden die Winkelimpulse jeweils entsprechend den Korrekturwerten ausgelassen, einfach oder mehrfach gezählt. Außerdem sind für den Korrekturwertspeicher N-Bit-Druckeingänge vorhanden, so daß auch eine druckabhängige Auswahl der Korrekturwerte möglich ist. Man kann so ein Kennfeld mit N Druckkennlinien für die Verstellung des Zündimpulses bereitstellen. Die einzelnen Korrekturimpulse können auch temperaturabhängig innerhalb des Multiplexers verändert werden.

Aufgabe der Erfindung ist eine Erhöhung der Korrekturmöglichkeiten durch Bereitstellung aller Einstellwerte für das Zündkennfeld und der Betriebsdaten des Verbrennungsmotors in dem Korrekturwertspeicher. Es wird eine drehzahlabhängige Temperaturkorrektur jedes einzelnen Auslöseimpulses gewünscht.

Diese Aufgabe wird nach der Erfindung durch folgende Merkmale gelöst:

a) zwischen den Winkeladreßzähler und den Korrekturwertspeicher ist ein Haltekreis eingeschaltet, der die Signalwerte der Winkeladreßleitungen mit Ausnahme der höchstwertigen Winkeladreßleitung bei Ablauf der Zeitbasis festhält;

b) für das Winkeladreßsignal des Winkeladreßzählers ist ein Decoder vorgesehen, der beim Auftreten bestimmter Winkeladressen Steuersignale zur Freigabe des Zeitbasiszählers und zur Freigabe von Wandler- und Haltestufen sowie zur Erzeugung von Übertragungssignalen abgibt;

c) ein A/D-Wandler ist zur Wandlung analoger Druck- und Temperaturwerte vorgesehen;

d) für den digitalen Druckwert und den digitalen Temperaturwert ist jeweils ein Haltekreis vorgesehen, dessen Ausgänge mit Adreßeingängen des Korrekturwertspeichers verbunden sind;

e) dem Auslösezähler ist ein Impulsverzögerungszähler nachgeschaltet, dessen Voreinstellung durch ein Temperaturkorrektursignal erfolgt.

Die Erfindung unterscheidet sich insofern vom Stand der Technik, als der Korrekturwertspeicher nicht nur während der Zeitbasis die Korrekturwerte bereitstellt, sondern außerdem alle Voreinstellwerte für die Zähler und zusätzlich in einer weiteren Adreßgruppe außerhalb der Zeitbasis Korrekturwerte für eine drehzahlabhängige Temperaturkorrektur des Zündzeitpunktes enthält. Außerdem sind die Betriebswerte des jeweiligen Verbrennungsmotors in dem Adreßspeicher gespeichert. Damit sind alle Betriebsdaten eines Verbrennungsmotors in einem einzigen Adreßspeicher vollständig verfügbar. Die Speicherwerte lassen sich leicht und sicher an geänderte Bedingungen anpassen. Die Speicherung der Betriebdaten ist sehr variabel.

Zum Abruf der Betriebswerte und zur Steuerung der Anordnung für die verschiedenen Funktionen sieht die Erfindung vor, daß der Decoder Übertragungswinkeladressen zur Übertragung der in dem Korrekturwertspeicher gespeicherten Voreinstellwerte und Betriebswerte für den Verbrennungsmotor in die verschiedenen Zähler, eine Auslösewinkeladresse zur Freigabe des Zeitbasiszählers und Winkeladreßintervalle für die Analog-Digital-Wandlung der Temperatur- und Druckwerte erkennt und Ausgangssignale auf entsprechenden Ausgangsleitungen abgibt. Damit lassen sich unterschiedliche Daten wie Korrekturwerte, Voreinstellwerte für Zähler, Informationen über Schließwinkel, andere Systeminformationen und Vorgabe besonderer Betriebskennlinien in sinnvoller Weise verarbeiten.

Zur Festhaltung der Drehzahlinformation während jeder Arbeitsperiode ist vorgesehen, daß die in dem Haltekreis festgehaltene Winkeladresse ein Maß für die Drehzahl ist und zusammen mit der höchstwertigen Winkeladreßleitung und den Temperaturwert auf dem Mehrbiteingang ein drehzahlabhängiges Temperaturkorrektursignal in dem Korrekturwertspeicher auswählt. Damit läßt sich eine drehzahlabhängige Korrektur des Zündzeitpunktes durchführen.

Da nach Ablauf der Zeitbasis die Winkelimpulse nacheinander und unbeeinflußt gezählt werden, ist vorgesehen, daß während des Winkeladreßintervalls für die Wandlung des Temperaturwertes derselbe in dem A/D-Wandler gewandelt wird und an dem Mehrbiteingang anliegt und daß mit Abschluß dieses Winkeladreßintervalls durch ein Übertragungssignal auf der Leitung der Korrekturwert auf den Ausgangsleitungen des Korrekturwertspeichers in den Impulsverzögerungszähler übernommen wird.

In einem weiteren Winkeladreßintervall ist vorgesehen, daß während des Winkeladreßintervalls für die Wandlung des Druckwertes derselbe in dem A/D-Wandler gewandelt wird und in dem Haltekreis für die folgende Arbeitsperiode auf dem Mehrbiteingang bereitgehalten wird.

Eine weitere parameterabhängige Korrektur ist dadurch sichergestellt, daß ein Decoder auf eine Gruppe von Bitstellen des Temperaturkorrekturwertes und auf Signale an einem äußeren Eingang anspricht und ein Mehrbitwählsignal auf der Wahlleitung für den Multiplexer bereitstellt.

Eine Ausführungsform der Erfindung wird im folgenden unter Bezugnahme auf die anliegende Zeichnung erläutert, die in schematischer Darstellung einen Verbrennungsmotor mit einem Blockschaltbild der Anordnung zeigt.

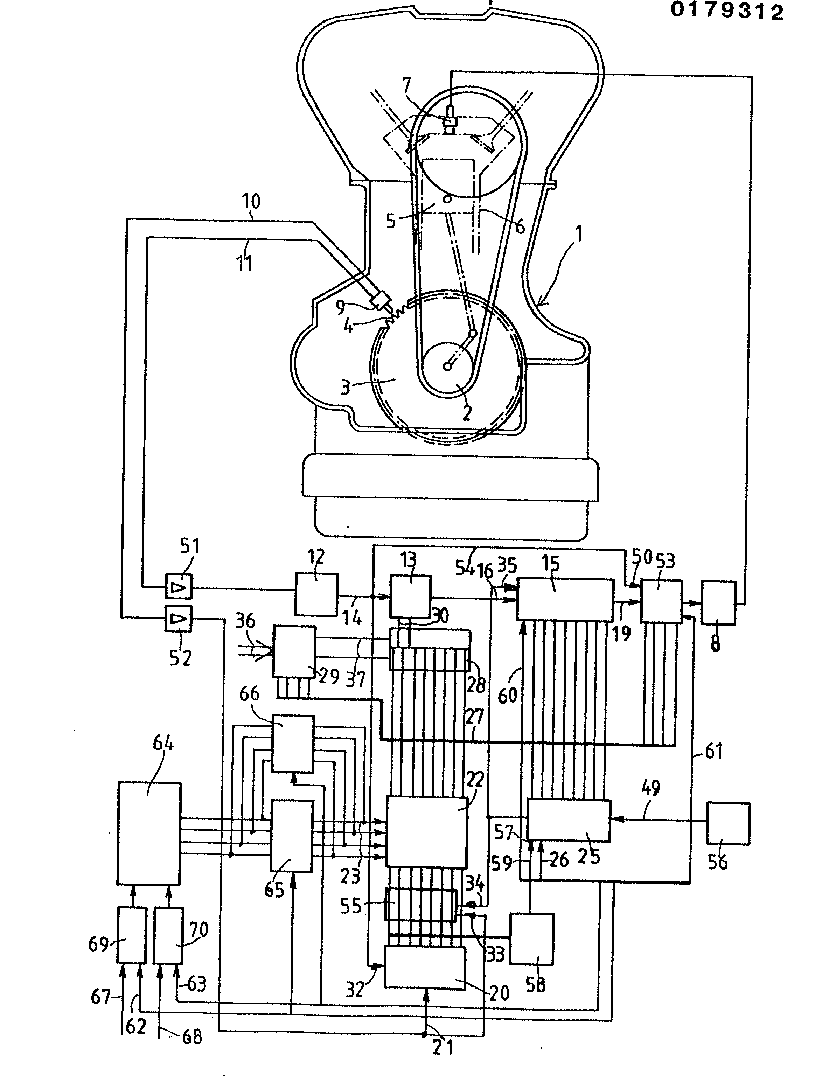

Die Figur zeigt in schematischer Darstellung einen Verbrennungsmotor 1. Auf einer Kurbelwelle 2 sitzt ein Schwungrad 3 mit einem Zahnkranz 4 für den Anlasser. Mit der Kurbelwelle 2 sind jeweils Kolben 5 gekoppelt, die sich in Zylindern 6 bewegen. Innerhalb des Zylinderkopfes ist jeweils mindestens eine Zündkerze 7 angebracht, die von einer Zündstufe 8 einen Zündimpuls erhält.

Dem Zahnkranz 4 steht ein Winkelimpulsgeber 9 gegenüber, der auf einer Leitung 10 Winkelimpulse entsprechend dem Vorübergang sämtlicher Zähne bzw. Zahnflanken des Zahnkranzes 4 abgibt, so daß die Impulsfrequenz dieser Winkelimpulse der Drehzahl des Schwungrades 3 und damit der Kurbelwelle 2 proportional ist. Andererseits wird auf einer Leitung 11 ein Bezugsimpuls beim Vorübergang eines Bezugszahnes des Zahnkranzes 4 abgegeben, der der Bezugsphase der Drehung der Kurbelwelle 2 entspricht. Der Bezugszahn trägt eine besondere Markierung zur Erzeugung dieses Bezugsimpulses. Die Impulse auf den Leitungen 10 und 11 werden jeweils in Impulsformern 51 und 52 geformt.

Die Anordnung zur Erzeugung eines Auslöseimpulses umfaßt eine Impulsstufe z.B. in Form eines Impulsverdopplers 12. An den Impulsverdoppler 12 schließt sich ein gesteuerter Vervielfacher 13 an, der einen Impulseingang 14 aufweist. Der gesteuerte Vervielfacher 13 ist nur dann im Sinne einer Impulsvervielfachung wirksam, wenn an einer Leitung 30 ein entsprechendes Steuersignal anliegt. Das Steuersignal ist ein 2-Bit-Signal, so daß vier Multiplikatoren entsprechend der gewünschten Vervielfachung dargestellt werden können. Der gesteuerte Vervielfacher 13 kann die ankommenden Impulse einfach, verdoppelt oder mit anderen Faktoren vervielfacht durchlassen. Die Ausgangsimpulse des gesteuerten Vervielfachers 13 liegen an einem Zähleingang 16 eines Auslösezählers 15 an. Ein "enable"-Eingang 35 des Auslösezählers 15 wird durch die Vorderflanke des Zeitbasisimpulses gesteuert.

Der Auslösezähler 15 gibt auf der Leitung 19 einen Auslöseimpuls ab, wenn der Überlaufwert erreicht ist. Die Leitung 19 führt zu einem Impulsverzögerungszähler 53. Die Leitung 19 liegt an dem "enable"-Eingang des Impulsverzögerungszählers 53 an. Zum Zähleingang 50 des Impulsverzögerungszählers 53 führt eine Leitung 54, die die Winkelimpulse des Impulsverdopplers 12 führt. Dem Impulsverzögerungszähler 53 ist die Zündstufe 8 nachgeschaltet, die unmittelbar den Zündimpuls für die Zündkerze 7 erzeugt. Es ist hier nur eine Zündstufe 8 für eine Zündkerze 7 dargestellt. Die Zündimpulse für die Zündkerzen der weiteren Zylinder lassen sich in bekannter Weise aus dem einen Zündimpuls ableiten und verteilen.

Die Ausgangsimpulse des Impulsverdopplers 12 liegen auch an einem Winkeladreßzähler 20 an, der einen Rückstelleingang 21 aufweist. Am Ausgang des Adreßzählers steht jeweils entsprechend dem Zählstand ein Mehrbitadreßsignal bereit, das unmittelbar den Winkel oder die Phase der Drehbewegung angibt. Das Mehrbitadreßsignal, im Fall des Ausführungsbeispiels ein 8-Bitadreßsignal, beaufschlagt über einen Haltekreis 55 den Andreßeingang eines Korrekturwertspeichers 22. Der Haltekreis 55 ist nur mit 7 Signalleitungen der niedrigwertigen Bitwerte verknüpft, die höchstwertige Bitleitung ist unmittelbar zu dem Korrekturwertspeicher 22 durchgeführt. Der Haltekreis 55 hat ferner einen Freigabeeingang 33, der durch den Bezugsimpuls geschaltet wird, und einen Sperreingang 34, der durch die Rückflanke des Zeitbasissignals gesteuert wird. Der Korrekturwertspeicher 22 enthält in den einzelnen Speicheradreßplätzen Mehrbitkorrekturwerte, die den Winkeladressen zugeordnet sind, worauf noch im einzelnen eingegangen wird. Der Korrekturwertspeicher weist einen weiteren Mehrbiteingang 23 auf, über den lastabhängige oder druckabhängige Adreßsignale eingegeben werden können.

Ein voreinstellbarer Zeitbasiszähler 25 besitzt einen Zähleingang 49, der von einem Taktoszillator 56 angesteuert wird, und einen "enable"-Eingang 26, so daß der Zeitbasiszähler 25 jeweils nach Auftreten eines Freigabesignals die Taktimpulse zählt und bis zum Erreichen eines Überlaufwertes ein Ausgangssignal einer vorgegebenen Zeitdauer zur Festlegung der genannten Zeitbasis abgibt, dessen Vorderflanke und Rückflanke ausgewertet wird. Ein Übertragungseingang 57 steuert die Übernahme des Voreinstellwertes aus dem Korrekturwertspeicher 22 über die Ausgangsschiene 27.

An die Adreßleitungsgruppe des Winkeladreßzählers 20 ist ein Decoder 58 angeschlossen, der auf bestimmte Winkeladressen anspricht. Die Ausgangsleitungen 59 ... 63 des Decoders 58 sind zu Übertragungseingängen und Freigabeeingängen der Zähler und Haltekreise geführt und steuern die Übertragung der Voreinstellwerte in die betreffenden Zähler und die Funktion der Haltekreise während der verschiedenen Intervalle einer Arbeitsperiode. Die Leitung 59 beaufschlagt den "enable"-Eingang 26 des Zeitbasiszählers 25, so daß der Decoder 58 des Beginn der Zeitbasis bei einer bestimmten Winkeladresse festlegt. Außerdem werden motortypabhängige Betriebssignale aus den vorgesehenen

Speicherplätzen übertragen.                                    0179312

Am Ausgang des Korrekturwertspeichers stehen Mehrbitkorrektursignale auf einer Datenschiene 27 zur Verfügung. Bei diesem Ausführungsbeispiel handelt es sich um 8-Bitkorrektursignale. Da von der Gesamtzahl der 8 Bit normalerweise nur ein geringer Anteil benötigt wird, können innerhalb der Mehrbitkorrektursignale Untergruppen ausgewertet werden, die verschiedenen Kennlinienfeldern zugeordnet sind und über einen Multiplexer 28 angesteuert werden. Die Ansteuerung des Multiplexers 28 erfolgt über einen Decoder 29, der auch eine externe Eingabe über die Eingänge 36 ermöglicht. Entsprechende Steuersignale für den Multiplexer 28 stehen auf der Wählleitung 37 zur Verfügung. Die Datenschiene 27 ist zur Bereitstellung der Voreinstellwerte auch zu dem Zeitbasiszähler 25 und dem Auslösezähler 15 geführt.

Am Eingang des Multiplexers 28 liegt ein 8-Bitsignal an. Im Multiplexer wird eine 2-Bitgruppe aus diesem 8-Bitsignal ausgewählt und auf den Leitungen 30 bereitgestellt. Die Leitungen 30 sind an eine nicht gesondert dargestellte Decodierstufe des gesteuerten Vervielfachers 13 angeschlossen. Die Ausgänge der Decodierstufe steuern die Vervielfachung. Mit einem 2-Bit-Signal auf den Leitungen 30 lassen sich also vier Multiplikatoren für die Vervielfachung codieren, z.B. die Multiplikatoren 0, 1, 2, 4. Die Ausgangsimpulse des gesteuerten Vervielfachers werden über den Zähleingang 16 des Auslösezählers 15 an.

Ein A/D-Wandler 64 dient zur Umwandlung von analogen Druckwerten, die auf der Leitung 67 anstehen, und von anlogen Temperaturwerten, die auf der Leitung 68 anstehen. Die Druckwerte können z.B. den Saugrohrdruck und die Temperaturwerte die Kühlwassertemperatur des Motors darstellen. Es sind auch andere Motorkennwerte möglich. Die Leitungen 67 und 68 sind jeweils über Torschaltungen 69 und 70 mit dem A/D-Wandler 64 verbunden. Die Torschaltungen 69 und 70 werden über Leitungen 62 und 63 von dem Decoder 58 angesteuert. Die Leitung 62 führt während des der Druckwandlung zugeordneten Winkeladreßintervalls und die Leitung 63 während des der Temperaturwandlung zugeordneten Winkeladreßintervalls einen H-Pegel. Jeweils während der genannten Intervalle ist der A/D-Wandler 64 wirksam und wandelt die anstehenden Analogspannungen in N-Bitsignale auf den Ausgangsleitungen um. Diese N-Bitsignale werden jeweils mit Ablauf der genannten Winkeladreßintervalle durch Übertragungssignale des Decoders 58 in Haltekreise 65 bzw. 66 übernommen. Weitere Steuersignale des Decoders 58

**0179312**

sichern eine winkeladreßrichtige Bereitstellung des Temperaturwertes an dem Mehrbiteingang 23.

Die Funktion der Anordnung wird jetzt im Zusammenhang erläutert. Im Betrieb des Verbrennungsmotors 1 treten in Abhängigkeit von der Drehung der Kurbelwelle 2 bei jeder Umdrehung ein Bezugsimpulse auf der Leitung 11 und Winkelimpulse auf der Leitung 10 auf. Der jeweilige Bezugsimpuls stellt den Winkeladreßzähler 20 über den Rückstelleingang 21 auf Null. Die am Zähleingang 32 anstehenden Winkelimpulse werden in dem Winkeladreßzähler 20 gezählt. Der Bezugsimpuls liegt auch am Freigabeingang 33 des Haltekreises 55 an, so daß der Haltekreis 55 alle Adreßsignale zum Korrekturwertspeicher 22 durchläßt.

Der Decoder 58 erkennt die ersten Winkeladressen und steuert entsprechende Übertragungsleitungen an. Beim Auftreten der entsprechenden Winekladressen werden jeweils die in dem Korrekturwertspeicher 22 gespeicherten Voreinstellwerte in den Auslösezähler 15 bzw. den Zeitbasiszähler 25 übertragen. Weitere Winkeladressen sind mit Betriebsdatensignalen für Schließwinkel, Winkelabstände weiterer Zündimpulse, Schiebekennlinie und dgl. belegt. Bei einer weiteren Winkeladresse wird der "enable"-Eingang 26 des Zeitbasiszählers 25 erregt, so daß jetzt die Taktimpulse am Zähleingang 49 gezählt werden. Die Vorderflanke des Zeitbasisimpulses erregt den "enable"-Eingang des Auslösezählers 15. Die entsprechenden Torschaltungen sind in Einzelheiten nicht dargestellt. Während der Dauer der Zeitbasis steht auf dem Mehrbiteingang 23 ein N-Bitdrucksignal bereit.

Entsprechend den Winkeladreßwerten am Ausgang des Winkeladreßzählers 20 und entsprechend den Druckwerten, die auf dem Mehrbiteingang 23 anstehen, werden die Adreßplätze des Korrekturwertspeichers 22 abgefragt. Die Korrekturwerte werden jeweils in den Multiplexer 28 übernommen. Entsprechend den Signalwerten auf der Wählleitung 37 erfolgt die Auswahl einer 2-Bitgruppe aus dem Korrekturwert. Danach werden die Ausgangssignale auf den Leitungen 30 bereitgestellt. Entsprechend vervielfacht werden die Winkelimpulse in dem Auslösezählers 15 gezählt, entweder ausgelassen, einfach, doppelt, vierfach oder in anderer Vielfachheit, je nach dem gewünschten Kennlinienverlauf.

Mit Ablauf der Zeitbasis ändert sich der Pegel des Ausgangssignals des Zeitbasiszählers 25. Die Rückflanke dieses Zeitbasissignals wird am Sperreingang des Haltekreises 55 wirksam, so daß dieser Haltekreis 55 die gerade anliegende Winkeladresse oder gegebenfalls den Winkelwert 127 festhält.

Nach Ablauf der Zeitbasis wird der Impulsvervielfacher 13 stillgesetzt und die Winkelimpulse werden in dem Auslösezähler 15 einfach weitergezählt, bis beim Überlaufwert des Auslösezählers 15 der Auslöseimpuls auftritt. Während dieser Zeitdauer wird in dem Decoder 58 das Winkeladreßintervall für die Umwandlung des analogen Temperaturwertes erfaßt. Ein Signal auf der Leitung 63 schaltet über die Torschaltung 70 den anlogen Temperaturwert zu dem D/A-Wandler 64 durch. Nach der Umwandlung in ein N-Bitsignal wird dieses in den Haltekreis 66 übernommen. Am Ende des betreffenden Winkeladreßintervalls liegt der Ausgang des Haltekreises an dem Mehrbiteingang 23 an. Die höchstwertige Adreßleitung führt infolge der Weiterzählung einen H-Pegel, so daß jetzt der Speicherplatz entsprechend der Winkeladresse bzw. der Drehzahl und der Temperatur angesprochen wird. Eine Bitgruppe, hier eine N-Bitgruppe des gespeicherten Korrektursignals wird als Voreinstellwert in den Impulsverzögerungszähler 53 übertragen. Der Impulsverzögerungswert desselben wird also drehzahl- und temperaturabhängig eingestellt.

Schließlich erreicht der Auslöseimpuls 19 den "enable"-Eingang 19 des Impulsverzögerungszählers 53. Jetzt werden am Zähleingang des Impulsverzögerungszählers 53 eine dem Voreinstellwert gleiche Anzahl von Winkelimpulsen gezählt, bis der Ausgangsimpuls erscheint und die Zündstufe 8 erregt.

Im weiteren Verlauf der Arbeitsperiode wird in dem Decoder 58 ein Winkeladreßintervall für die Umwandlung des Druckwertes erfaßt. Die Torschaltung 69 läßt unter der Steuerung des Impulses auf der Leitung 62 den analogen Druckwert zu dem A/D-Wandler 64 durch. Der digitale Druckwert wird in den Haltekreis 65 übernommen und liegt während des übrigen Teils der Arbeitsperiode und auch während der Dauer der Zeitbasis an dem Mehrbiteingang 23 an.

Der Decoder 29 übernimmt eine Bitgruppe des Temperturkorrektursignals und stellt ein Auswahlsignal für den Multiplexers 28 bereit. Der Decoder 29 kann auch von einem äußeren Schaltkreis angesteuert werden.

Während einer jeden Arbeitsperiode erfolgt also eine drehzahl- und druckabhängige Korrektur und außerdem eine drehzahl- und temperaturabhängige Korrektur des Zündzeitpunktes.

Haßler, Werner, Dr.

Patentanwalt

Asenberg 62

D-5880 Lüdenscheid (DE)

0179312

27. September 1985

A 85 083

Anmelderin: Firma Atlas Fahrzeugtechnik GmbH

Eggenpfad 26

D-5980 Werdohl (DE)

## Anordnung zur Erzeugung eines Auslöseimpulses

### Patentansprüche

1. Anordnung zur Erzeugung eines Auslöseimpulses für die Zündung eines Verbrennungsmotors, der innerhalb einer Arbeitsperiode um eine von Drehzahl und anderen Kenngrößen abhängige Phase gegenüber einer Bezugsphase verzögert ist, wobei ausgehend von der Bezugsphase neben einem Bezugsimpuls kurbelwellenwinkelsynchrone Winkelimpulse erzeugt werden, die in einen Winkeladreßzähler eingespeist werden, an dessen Ausgang auf Winkeladreßleitungen ein dem jeweiligen Winkelimpuls zugeordnetes Mehrbitadreßsignal zur Verfügung steht, das an einem Korrekturwertspeicher anliegt, der an seinem Ausgang ein digitales Korrektursignal bereitstellt, wobei ferner ein Zeitbasiszähler zur Vorgabe eines Korrekturintervalls während jeder Arbeitsperiode vorgesehen ist und wobei die Winkelimpulse an einem steuerbaren Vervielfacher anliegen, dessen Steuereingang durch das Korrektursignal gesteuert wird und dessen Ausgang an einem Auslösezähler anliegt, der bei Erreichen eines Überlaufwertes einen Auslöseimpuls abgibt, gekennzeichnet durch folgende Merkmale:

a) zwischen den Winkeladreßzähler (20) und den Korrekturwertspeicher (22) ist ein Haltekreis (55) eingeschaltet, der die Signalwerte der Winkeladreßleitungen mit Ausnahme der höchstwertigen Winkeladreßleitung bei Ablauf der Zeitbasis festhält;

b) für das Winkeladreßsignal des Winkeladreßzählers (20) ist ein Decoder (58) vorgesehen, der beim Auftreten bestimmter Winkeladressen Steuersignale zur Freigabe des Zeitbasiszählers (25) und zur Freigabe von Wandler- und Haltestufen sowie zur Erzeugung von Übertragungssignalen abgibt;

c) ein A/D-Wandler (64) ist zur Wandlung analoger Druck- und Temperaturwerte vorgesehen;

d) für den digitalen Druckwert und den digitalen Temperaturwert ist jeweils ein Haltekreis (65, 66) vorgesehen, dessen Ausgänge mit Adreßeingängen des Korrekturwertspeichers (22) verbunden sind;

e) dem Auslösezähler (15) ist ein Impulsverzögerungszähler (53) nachgeschaltet, dessen Voreinstellung durch ein Temperaturkorrektursignal erfolgt.

2. Anordnung nach Anspruch 1, dadurch gekennzeichnet, daß der Decoder (58) Übertragungswinkeladressen zur Übertragung der in dem Kor- rekturwertspeicher (22) gespeicherten Voreinstellwerte und Betriebswerte für den Verbrennungsmotor in die verschiedenen Zähler, eine Auslösewinkeladresse zur Freigabe des Zeitbasiszählers (25) und Winkeladreßintervalle für die Analog-Digital-Wandlung der Temperatur- und Druckwerte erkennt und Ausgangssignale auf entsprechenden Ausgangsleitungen (59 ... 63) abgibt.

3. Anordnung nach Anspruch 1 oder 2, dadurch gekennzeichnet, daß die in dem Haltekreis (55) festgehaltene Winkeladresse ein Maß für die Drehzahl ist und zusammen mit der höchstwertigen Winkeladreßleitung und dem Temperaturwert auf dem Mehrbiteingang (23) ein drehzahlabhängiges Temperaturkorrektursignal in dem Korrekturwertspeicher (22) auswählt.

4. Anordnung nach Anspruch 3, dadurch gekennzeichnet, daß während des Winkeladreßintervalls für die Wandlung des Temperaturwertes derselbe in dem A/D-Wandler (64) gewandelt wird und an dem Mehrbitein- gang (23) anliegt und daß mit Abschluß dieses Winkeladreßintervalls durch ein Übertragungssignal auf der Leitung (61) der Korrekturwert auf den Ausgangsleitungen des Korrekturwertspeichers in den Impulsverzögerungszähler (53) übernommen wird.

5. Anordnung nach einem der Ansprüche 1 bis 4, dadurch gekennzeichnet, daß während des Winkeladreßintervalls für die Wandlung des Druckwertes derselbe in dem A/D-Wandler (64) gewandelt wird und in dem Haltekreis (65) für die folgende Arbeitsperiode auf dem Mehrbiteingang (23) bereitgehalten wird.

6. Anordnung nach einem der Ansprüche 1 bis 5, dadurch gekennzeichnet, daß ein Decoder (29) auf eine Gruppe von Bitstellen des Temperaturkorrekturwertes und auf Signale an einem äußeren Eingang (36) anspricht und ein Mehrbitwählsignal auf der Wahlleitung (37) für den Multiplexer (28) bereitstellt.

0179312